# EUROPÄISCHE PATENTANMELDUNG

(11) **EP 4 725 282 A1**
(43) Veröffentlichungstag der Anmeldung: **15.04.2026**
(21) Anmeldenummer: 25208174.0
(22) Anmeldetag: 13.10.2025
(51) Int. Cl.: A01B 29/04, A01B 49/02, A01B 29/06

(54) **WALZENKÖRPER**

(30) Priorität: 14.10.2024 DE 102024129753; 28.07.2025 DE 102025129703
(71) Anmelder: Lemken GmbH & Co KG, 46519 Alpen (DE)
(72) Erfinder: Passmann, Niklas, 47495 Rheinberg (DE)

(57) **Zusammenfassung**

Es wird ein Walzenkörper mit Mitnehmern vorgeschlagen, welcher eine verschränkte Anordnung der Mitnehmer für einen verbesserten Bodenantrieb des Walzenkörpers aufweist.

## Beschreibung

Die Erfindung betrifft einen Walzenkörper gemäß Oberbegriff des Patentanspruches 1.

Landwirtschaftliche Bodenbearbeitungsgeräte werden zum Schneiden, Lockern, Zerkleinern oder Mischen von Bodenmaterial oder auf einer Bodenoberfläche befindlichen Aufwuchs wie Unkraut oder Pflanzenreste verwendet. Dazu weisen die Bodenbearbeitungsgeräte Walzenkörper, insbesondere Packerwalzen, auf, welche der Rückverfestigung des von dem Bodenbearbeitungsgerät gelockerten Bodenmaterials sowie auch der Einarbeitung von eventuell aufliegenden Pflanzenresten dienen.

Die Anmeldung EP 150080 A2 zeigt eine Zahnpackerwalze mit um einen Walzenhohlkörper ringförmig und seitlich beabstandet angeordneten Zahnprofilen. Weiterhin zeigt die Anmeldung DE10331233A1 einen ringförmigen Walzenkörper mit auf den Walzenringen erhaben aufgeschweißten Wellprofilen.

Beide Walzenformen ermöglichen zwar einen gewissen Krümelungs- und Zerkleinerungseffekt durch die zahn- oder wellförmigen Profile, hinterlassen jedoch entsprechend ihrer Materialdicke einen Bodenschlitz, welcher in nassen Bodenverhältnissen verschmiert und nur einen unzureichenden Bodenantrieb der Walzenkörper gewährleistet, welcher zum Stillstand der Walze und somit zu ungewolltem Aufstauen und Haufenbildung von Bodenmaterial führt.

Aufgabe der Erfindung ist es, obige Nachteile durch eine neue Mitnehmeranordnung zu beheben und die Walzenwirkung zu verbessern.

Diese Aufgabe wird durch die Merkmale des kennzeichnenden Teiles des Anspruches 1 gelöst. Weitere Vorteile werden in den nachfolgenden Ansprüchen behandelt.

Auf einem Walzenkörper mit einem umlaufenden Walzenmantel, sind Mitnehmer erhabend und abstehend auf dem Teilkreisumfang des Walzenmantels angeordnet. Dabei weisen die Mitnehmer jeweils Mitnehmerenden auf, welche seitlich verschränkt zum Teilkreisumfang des Walzenmantels angeordnet sind. Durch die Verschränkung der Mitnehmerenden vergrößert sich, insbesondere in Fahrtrichtung gesehen, die projizierte Fläche der Mitnehmerenden im Kontakt mit der Bodenoberfläche. Durch diese Anordnung erreicht der Walzenkörper bei Kontakt mit der Bodenoberfläche einen verbesserten Bodenantrieb. Dies vermindert den Schlupf der Walze und somit ein Aufbauen von Boden- und Pflanzenmaterial als Wall vor dem Walzenkörper, was nachteilig zu weiterem Schlupf und Blockieren der Walze im Boden führen würde

In einer weiteren Erfindungsform des Walzenkörpers sind die Mitnehmerenden seitlich abwechselnd nach rechts und links verschränkt angeordnet. Durch diese Anordnung wird der Abstand der einzelnen Mitnehmerenden zueinander in Diagonalrichtung vergrößert. Dies bewirkt vorteilhaft eine geringere Verstopfungsanfälligkeit und somit einen verbesserten Antrieb der Walze.

In einer weiteren Verbesserung des Walzenkörpers führt dieser durch Bodenkontakt eine Drehbewegung in einem Drehsinn aus. Dies entspricht beispielsweise dem Bodenantrieb des Walzenkörpers bei Vortrieb des Bodenbearbeitungsgerätes, an welchem der Walzenkörper befestigt ist. Dabei sind die Mitnehmerenden entgegen dem Drehsinn ausgerichtet angeordnet. Durch diese Anordnung werden die Mitnehmerenden nach Bodenkontakt aufsteigend von der Bodenoberfläche hochgezogen und reinigen sich vorteilhaft selbst von anhaftendem Bodenmaterial oder Pflanzenresten.

In einer verbesserten Ausführung des Walzenkörpers sind die Mitnehmer hakenförmig ausgebildet. Dabei sind die Mitnehmerenden als freies, vom Walzenmantel abstehendes Hakenende ausgebildet. Auch durch diese besondere Form der Mitnehmer wird ein verbesserter Selbstreinigungseffekt des Walzenkörpers erzielt, indem vorteilhaft anhaftendes Bodenmaterial oder Pflanzenreste von den freien Hakenenden abfällt.

In einer besonderen Ausführungsform des Walzenkörpers sind die Mitnehmer mit zumindest einem Schränkungsknick versehen, welcher eine radial vom Walzenmantel abstehende Knickachse, Kantachse oder Biegeachse aufweist. Durch das Abrollen des Walzenkörpers über ein Hindernis im Boden, wie beispielsweise ein größerer Stein, wirken partielle Kräfte auf die einzelnen Mitnehmer insbesondere in radialer Richtung des Walzenmantels oder des Walzenkörpers. Dadurch, dass die Knickachse, Kantachse oder Biegeachse des Mitnehmerendes genau in Richtung der einwirkenden Kräfte, also radial zum Walzenmantel oder zur Mitte oder Rotationsachse des Walzenkörpers ausgerichtet ist, wird einem ungewollten Verbiegen der Mitnehmerenden bei Hinderniskontakt wirksam entgegengetreten.

In einer weiter besonderen Ausführungsform des Walzenkörpers sind weisen die Mitnehmer zumindest einen Schränkungsknick (6) auf, wobei der Schränkungsknick (6) eine tangential oder konzentrisch zum Walzenmantel (10) oder Walzenkörper (1) verlaufende Knickachse, Kantachse oder Biegeachse (7) aufweist. Durch die tangential oder konzentrisch zum Walzenmantel (10) oder Walzenkörper (1) verlaufende Knickachse, Kantachse oder Biegeachse (7) wird diese in ihrer wirksamen Biegelänge verlängert. Hierdurch steigt der Biegewiderstand oder das zulässige Biegemoment des Mitnehmers. Hierdurch , wird ebenfalls einem ungewollten Verbiegen der Mitnehmerenden bei Hinderniskontakt wirksam entgegengetreten.

In einer weiteren Erfindungsform des Walzenkörpers ist das freie Hakenende parallel zum Teilkreisumfang beziehungsweise dessen Teilkreisebene endend ausgebildet. Dabei wird dem freien Hakenende ein weiterer Knick oder eine Biegung hinzugefügt, welcher entgegengesetzt zum ersten Schränkungsknick des Mitnehmers ausgerichtet ist. Hierdurch wird die Aufstandslinie des Mitnehmers im Kontakt mit der Bodenoberfläche verlängert. Dies bewirkt eine verbesserte Krümelwirkung des Walzenkörpers und Einarbeitung von Pflanzenresten in die Bodenoberfläche.

In einer weiteren Erfindungsform des Walzenkörpers ist das freie Hakenende abgewinkelt zum Teilkreisumfang beziehungsweise dessen Teilkreisebene endend ausgebildet. Durch die Abwinkelung des Hakenendes zum Teilkreisumfang beziehungsweise dessen Teilkreisebene wird eine gewünschte, partielle Bodenverdichtung im Bereich des Hakenendes erzielt und zugleich eine Krümelstruktur des Bodens benachbart zu den Bodenverdichtungszonen erzeugt. Durch diese Krümelstruktur wird eine verbesserte Wasserinfiltration in den Boden bei höheren Niederschlags- oder Regenmengen erzielt.

Für eine rationelle Herstellung des Walzenkörpers sind mehrere Mitnehmer in einem Ring oder Ringsegment zusammengefasst ausgebildet oder angeordnet. Dabei können aus einem Zuschnitt die jeweiligen Mitnehmer durch einen Kant- oder Pressvorgang verschränkt werden. In einem weiteren Schritt können der Ring oder die Ringsegmente mit den verschränkten Mitnehmern auf dem Walzenmantel befestigt und insbesondere bevorzugt mit diesem verschweißt werden.

In einer besonderen Ausführungsform des Walzenkörpers ist der Walzenmantel aus mehreren Teilringen gebildet. Dabei sind die Teilringe entlang der axialen Erstreckung des Walzenkörpers beabstandet angeordnet. Durch diese Ausführung wird eine verbesserte Verdichtungs- oder Packerwirkung des Walzenkörpers in tieferen Bodenschichten vorteilhaft erreicht.

In einer weiter verbesserten Form des Walzenkörpers weisen die Teilringe schräge Mantelflächen auf. Dabei sind die freien Hakenenden entlang deren Erstreckung zumindest abschnittsweise mit einem sich vergrößernden Abstand zur Mantelfläche angeordnet. Die schrägen Mantelflächen der Teilringe verbessern einerseits ebenfalls vorteilhaft die Verdichtungs- oder Packerwirkung des Walzenkörpers in tieferen Bodenschichten. Anderseits wird durch den sich vergrößernden Abstand der freien Hakenenden zur Mantelfläche ein Anhaften von Bodenmaterial oder ein Einklemmen von Steinen oder Pflanzenresten wirksam vermieden. Dies bewirkt eine verbesserte Selbstreinigung des Walzenkörpers.

In einer weiteren Erfindungsform des Walzenkörpers sind mehrere Mitnehmer auf einem jeweiligen Teilkreisumfang des Walzenmantels und die jeweiligen Teilkreisumfänge in einer seitlichen Teilung entlang der axialen Erstreckung des Walzenkörpers beabstandet angeordnet. Dabei sind die Mitnehmer auf dem jeweiligen Teilkreisumfang in einer Umfangsteilung beabstandet angeordnet. Weiterhin sind die Mitnehmer der jeweiligen Teilkreisumfänge in einem Versatz der Umfangsteilung oder bevorzugt spiralförmig entlang der axialen Erstreckung des Walzenkörpers angeordnet. Bevorzugt beträgt der Versatz der Umfangsteilung einen Bruchteil der Umfangsteilung der Mitnehmer auf dem jeweiligen Teilkreisumfang. Weiter bevorzugt beträgt der Bruchteil nicht mehr als einem Halb der Umfangsteilung. Hierdurch wird der Abstand seitlich zueinander benachbarter Mitnehmer in diagonaler Richtung vergrößert. Dies verhindert ebenfalls ein Anhaften von Bodenmaterial oder ein Einklemmen von Steinen oder Pflanzenresten. Weiterhin bewirkt der Versatz der Mitnehmer eine verbesserte Laufruhe des Walzenkörpers beim Abrollen auf der Bodenoberfläche.

In einer weiter verbesserten Form des Walzenkörpers sind mehrere Mitnehmer auf einem jeweiligen Teilkreisumfang des Walzenmantels und die jeweiligen Teilkreisumfänge in einer seitlichen Teilung entlang der axialen Erstreckung des Walzenkörpers beabstandet angeordnet. Dabei entspricht der seitliche Abstand beziehungsweise die Ausladung der Verschränkung der Mitnehmerenden maximal einem Halb der seitlichen Teilung beziehungsweise dem Abstand der jeweiligen Teilkreisumfänge zueinander. Durch diese Anordnung wird eine seitliche Überlappung der jeweils benachbarten Mitnehmer und dadurch ein Anhaften von Bodenmaterial oder ein Einklemmen von Steinen oder Pflanzenresten vermieden. Weiterhin können ergänzend Abstreifer an dem Walzenkörper angeordnet werden, welche zwischen die Mitnehmer in den Walzenkörper oder auf dessen Walzenmantel eingreifen können. Hierdurch wird eine Verstopfung des Walzenkörpers durch Bodenmaterial oder eingeklemmte Steine oder Pflanzenreste vermieden.

In einer anderen Form des Walzenkörpers entspricht der seitliche Abstand beziehungsweise die Ausladung der Verschränkung der Mitnehmerenden maximal der Teilringbreite eines Teilringes. Durch diese Ausführungsform wird der Einbau von Abstreifern oder Auswerfern in die Zwischenräume der Teilringe des Walzenkörpers ermöglicht und ein Einklemmen von Bodenmaterial oder Fremdkörpern zwischen den Teilringen vermieden.

In einer besonderen Erfindungsform sind ein erster und ein zweiter Walzenkörper hintereinander versetzt angeordnet. Dabei sind die Mitnehmer zumindest des ersten Walzenkörpers seitlich entlang der axialen Erstreckung des ersten Walzenkörpers versetzt angeordnet. Die Walzenkörper weisen einen jeweiligen Außenumfang auf. Die Mitnehmer sind dabei überlappend in den Außenumfang des zweiten Walzenkörpers ineinandergreifend angeordnet. Dabei kann der erste Walzenkörper sowohl einen durchgehenden Walzenmantel als auch unterteilte Teilringe aufweisen, während der zweite Walzenkörper zumindest unterteilte Teilringe aufweist oder identisch zum ersten Walzenkörper ausgebildet ist, jedoch dessen Mitnehmer seitlich zu den Mitnehmern des ersten Walzenkörpers versetze Mitnehmer aufweist. Durch die sich im Überlappungsbereich ergebende, gegenläufige Bewegung der Mitnehmer des ersten Walzenkörpers zu den Teilringen des zweiten Walzenkörpers beziehungsweise dessen Mitnehmern entsteht ein Selbstreinigungseffekt der Walzenkörper zueinander, ohne dass es weiterer Abstreifer bedarf. Dabei beträgt der Achsabstand der Lagerachsen des ersten und zweiten Walzenkörpers weniger als die Hälfte der Summe der Außendurchmesser des ersten und des zweiten Walzenkörpers.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein landwirtschaftliches Gerät in Seitenansicht,
Fig.2 eine Perspektive einer Walzenanordnung,
Fig.3 eine Perspektive eines weiteren Walzenkörpers,
Fig.4 eine Seitenansicht eines einzelnen Teilringes des Walzenkörpers,
Fig.5 eine Vorderansicht des einzelnen Teilringes aus Fig. 4,
Fig.6 eine Perspektive einer Walzenanordnung mit zwei Walzenkörpern,
Fig.7 eine weitere Seitenansicht eines Teilringes des Walzenkörpers und
Fig.8 eine weitere Vorderansicht des einzelnen Teilringes aus Fig. 7..

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

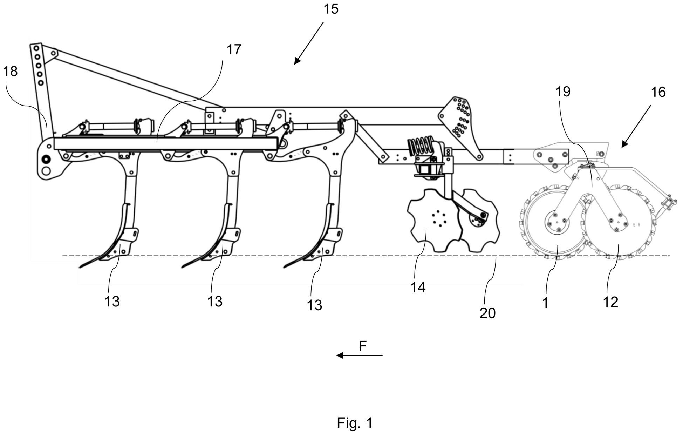

Figur 1 zeigt ein landwirtschaftliches Gerät 15 mit einer Walzenanordnung 16 in Seitenansicht. Das landwirtschaftliche Gerät 15 kann als Sä- oder Verteilmaschine oder wie dargestellt als Bodenbearbeitungsgerät ausgebildet sein. Ebenso kann das landwirtschaftliche Gerät 15 allein mit einer Walzenanordnung 16 oder einer Kombination mehrerer, auch verschiedener Walzenanordnungen 16, ausgebildet sein. Das landwirtschaftliche Gerät 15 weist einen Rahmen 17 und einen Anbauturm 18 zum Anbau an ein nicht dargestelltes Zugfahrzeug auf. Alternativ kann das landwirtschaftliche Gerät 15 ein Fahrwerk und eine Zugeinrichtung zur Verbindung mit dem Zugfahrzeug aufweisen. Das Zugfahrzeug dient dem Vortrieb des landwirtschaftlichen Gerätes 15 über die Bodenoberfläche 20 eines landwirtschaftlichen Ackers in Arbeits- oder Fahrtrichtung F. Das als Bodenbearbeitungsgerät ausgebildete landwirtschaftliche Gerät 15 weist mehrere am Rahmen 17 angeordnete, seitlich und bevorzugt auch in Längsrichtung zueinander versetzte Bodenbearbeitungswerkzeuge 13 auf. Am Rahmen 17 des landwirtschaftlichen Gerätes 15 sind bevorzugt höhenverstellbar eine Walzenanordnung 16 sowie optional weitere Einebnungswerkzeuge 14 angeordnet. Die Walzenanordnung 16 und die daran in einem Walzenrahmen 19 drehbar gelagerten Walzenkörper 1,12 dienen einerseits der Tiefenführung der Bodenbearbeitungswerkzeuge sowie der Rückverfestigung des durch die Bodenbearbeitungswerkzeuge 13 gelockerten Bodenmaterials der Bodenoberfläche. Im Falle einer Sä- oder Verteilmaschine sind der Walzenanordnung 16 nicht dargestellte Verteil- oder Ausbringwerkzeuge vor- oder nachgelagert zugeordnet.

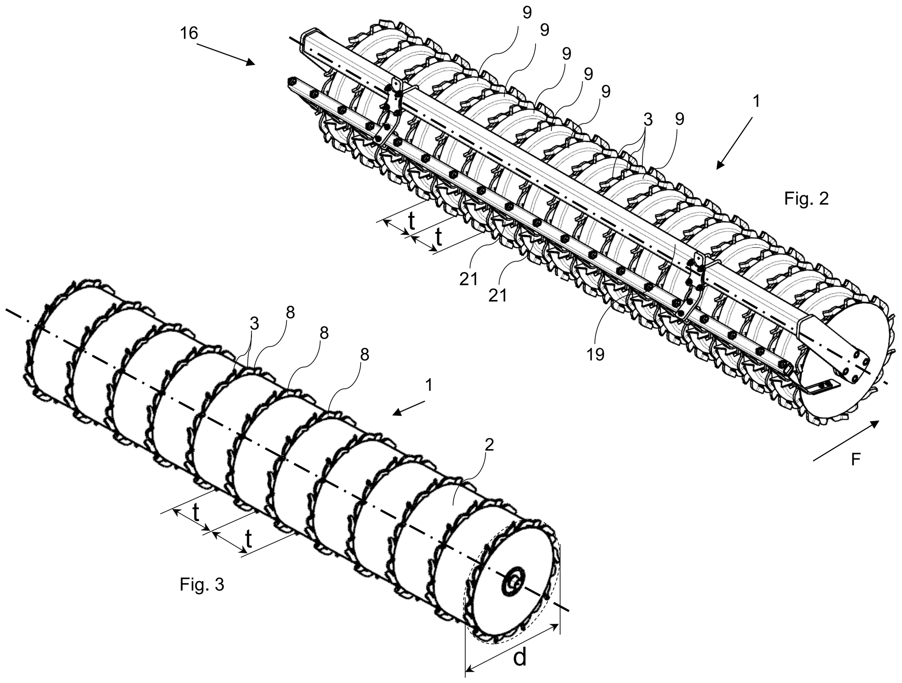

In Figur 2 ist eine Walzenanordnung 16 mit einem einzelnen Walzenkörper 1 dargestellt, welcher drehbar in einem Walzenrahmen 19 gelagert ist. Der Walzenkörper 1 ist entlang seiner axialen Erstreckung in mehrere, um mit einem Zwischenraum beabstandete Teilringe 9 aufgeteilt. Die Teilringe 9 sind jeweils in einem seitlichen Teilungsabstand t zueinander versetzt. Am Außenumfang eines jeden Teilringes 9 sind Mitnehmer 3 in einer gleichmäßigen Umfangsteilung angeordnet und abwechselnd rechts und links verschränkt. In die Zwischenräume ragen mehrere Abstreifer 21, welche der Reinigung des Walzenkörpers von anhaftenden Bodenmaterial und Pflanzenresten dienen. Die Abtreifer sind am Walzenrahmen 19 mit einem Hilfsträger befestigt. Das abgestreifte Bodenmaterial und Pflanzenreste fallen in Bewegungsrichtung F der Walzenanordnung 16 gesehen hinter dieser zurück auf die Bodenoberfläche, auf welcher der Walzenkörper 1 in Richtung F abrollt.

Figur 3 zeigt alternativ zu Figur 2 einen Walzenkörper 1 mit einem durchgehenden, bevorzugt zylinderförmigen Walzenmantel 2. Auf diesem sind entlang seiner axialen Erstreckung seitlich beabstandet mehrere Ringe oder Ringsegmente 8 angeordnet, welche an ihrem Außenumfang oder Teilkreisumfang 11 die jeweils nach rechts und links verschränkten Mitnehmer 3 beinhalten. Auch hier sind die Mitnehmer in einer gleichmäßigen Teilung t entlang des Teilkreisumfanges 11 eines Ringes 8 oder der Ringsegmente 8 in gleichmäßigen Abständen angeordnet.

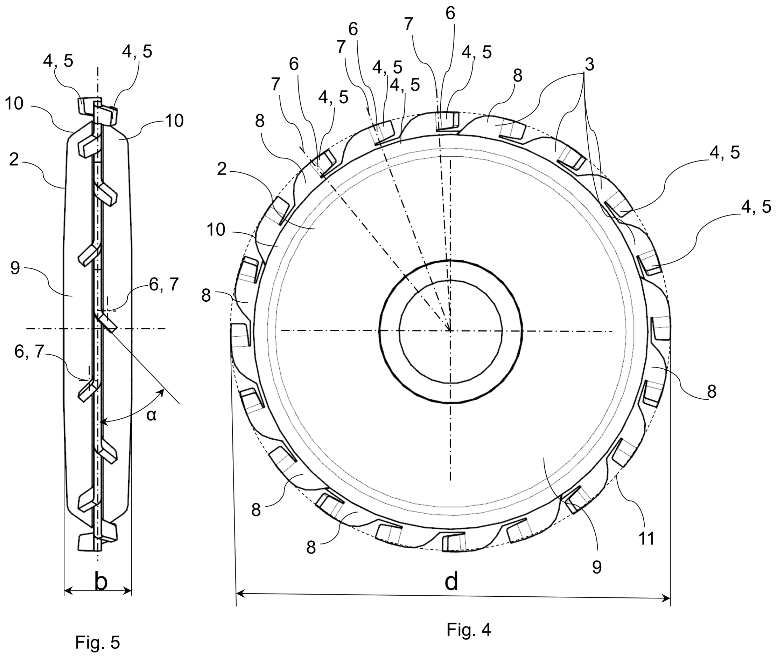

Figur 4 und 5 zeigen einen einzelnen Teilring 9 des Walzenkörpers 1 in Vorder- und in korrespondierender Seitenansicht. Der Teilring 9 weist eine gesamte Breite b sowie einen Teilkreisumfang mit dem Durchmesser d auf. Der Walzenmantel 2 des Teilringes 9 ist aus zwei gegeneinander gerichteten Halbschalen gepresst, in deren Mitte sich die Mitnehmer 3 erhaben vom Walzenmantel 2 abstehend zum Durchmesser d des Teilkreisumfanges 11 erstrecken. Die Mitnehmer 3 sind in regelmäßigen Abständen auf dem Teilkreisumfang 11 verteilt angeordnet und bevorzugt aus einem Ring oder Ringsegment 8 als Zuschnitt gefertigt. Im vorliegenden Beispiel sind jeweils vier Mitnehmer 3 in einem Ringsegment zusammengefasst. Die Mitnehmerenden 4 der Mitnehmer 3 sind jeweils abwechselnd nach rechts und links um die Biegeachsen 7 aus der Mitte des Teilringes 9 mit einem Schränkungsknick 6 nach außen gebogen beziehungsweise gekantet oder verschränkt. Die Biegewinkel α der Mitnehmerenden 4 sind, im Schränkungsknick 6 zu einer Ebene durch den Teilkreisumfpang 11 der Mitnehmer 3 oder der Mittelebene des Teilringes 9 gemessen, jeweils in einem spitzen Winkel α gebogen. Bevorzugt betragen die Biegewinkel α zumindest 20 Grad, jedoch nicht mehr als 80 Grad und liegen weiter bevorzugt in einem Bereich zwischen 30 und 60 Grad, weiter bevorzugt 45 Grad. In einer weiteren Ausführungsform können die Hakenenden 5 in einer weiteren, in Richtung des Hakenendes 5 folgenden Biegung entgegengesetzt zurück gebogen werden. Der Biegewinkel entspricht bevorzugt den vorgenannten Größenordnungen und ist weiter bevorzugt identisch, jedoch entgegengesetzt zur ersten Biegung des Mitnehmerendes 4 ausgeführt. Die jeweiligen Biegeachsen 7 der Mitnehmerenden 4 sind dabei jeweils fluchtend zum Mittelpunkt des Walzenkörpers 1 oder seiner Rotationsachse beziehungsweise des Teilringes 9 ausgerichtet. Durch diese Anordnung stehen die Biegeachsen 7 der Mitnehmerenden 4 jeweils senkrecht und somit radial zum Außenumfang oder Teilkreisumfang 11 des Walzenkörpers 1 oder im Falle einer durchgehenden Walze, wie in Figur 3 dargestellt, senkrecht zur Mantelfläche 11 des Walzenmantels 2. Die Mantelflächen 10 des Walzenmantels 2 des Teilringes 9 sind vorliegend jeweils abfallend zur Mitte des Teilringes 9 abgeschrägt, so dass diese im Kontakt mit der Bodenoberfläche einen V-förmigen Keil als Rille oder Furche in der Bodenoberfläche hinterlassen. Die dadurch entstehende , V-förmige Rille im Boden wird durch die Hakenenden 5 der abgebogenen Mitnehmerenden 4 an ihren V-Flanken jeweils partiell unterbrochen. Hierdurch wird die kappilare Wasseraufnahme des Bodens verbessert. Die Hakenenden 5 der abgebogenen Mitnehmerenden 4 stehen jeweils frei über die jeweilige Mantelfläche 10. Durch die abgeschrägte Mantelfläche und /oder der gewählten Form des Hakenendes 5 vergrößert sich die lichte Weite zwischen Hakenende 5 und Mantelfläche 10, wie in Figur 5 zu sehen, zunehmend. Hierdurch wird ein Einklemmen von Bodenmaterial, Pflanzenresten oder Fremdkörpern zwischen den Mitnehmerenden 4 und dem Walzenmantel 2 vermieden. Die Biegung oder Verschränkung der Mitnehmerenden 4 beziehungsweise deren Hakenende 5 ragt seitlich nicht über die Breite b des Teilringes 9 hinaus. Somit beträgt die jeweilige seitliche Ausladung der Biegung oder Verschränkung der Mitnehmerenden 4 nicht mehr als die Hälfte der Breite b, weiter bevorzugt nicht mehr als ein Drittel der Breite b, noch weiter bevorzugt nicht mehr als ein Viertel der Breite b des Teilringes 9. Alternativ zu einem Schränkungsknick 6 können die Mitnehmer 3 entsprechend der vorgeschlagenen Winkel α insbesondere auch einzeln auf dem Walzenmantel Umfang 10 oder dem Walzenkörpers 1 oder am Außenumfang des Teilringes 9 befestigt und insbesondere verschweißt werden.

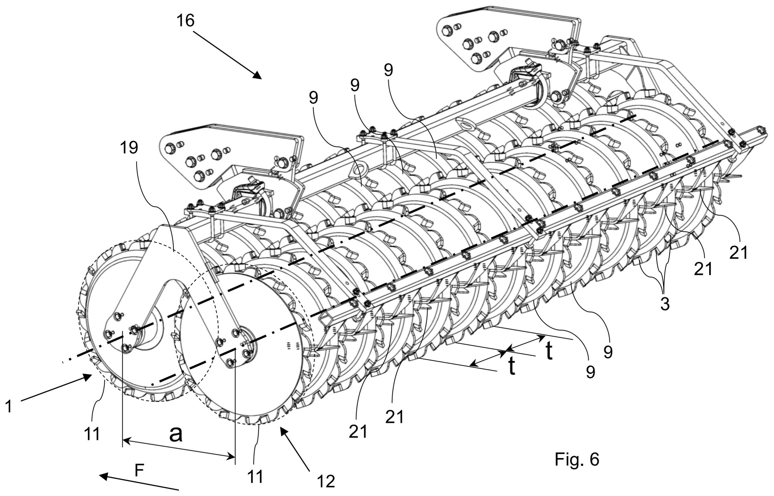

Figur 6 zeigt eine als Doppelwalze ausgeführte Walzenanordnung 16 in Perspektive von schräg hinten gesehen. Es sind ein erster Walzenkörper 1 sowie ein zweiter Walzenkörper 12 um den Achsabstand a, in Fahrt- oder Arbeitsrichtung F gesehen, hintereinander angeordnet und drehbar im Walzenrahmen 19 gelagert. Die Walzenkörper 1 und 12 sind im vorliegenden Beispiel aus Teilringen 9 gebildet, welche entlang der axialen Erstreckung der Walzenkörper 1 und 12 um einen jeweiligen seitlichen Teilungsabstand t versetzt zueinander und einen Zwischenraum zum jeweils nächsten Teilring 9 bildend angeordnet sind. Am hinteren Ende der Walzenanordnung 16 ragen jeweils optionale Abstreifer 21 in die Zwischenräume der Teilringe 9 hinein, wie bereits in Figur 1 beschrieben. Die Teilringe 9 des ersten Walzenkörpers sowie die Teilringe 9 des zweiten Walzenkörpers sind jeweils um einen halben Teilungsabstand t seitlich zueinander versetzt, so dass die jeweiligen Teilkreisumfänge 11 der einzelnen Teilringe 9 mit ihren darauf angeordneten Mitnehmern 3 ineinander greifen beziehungsweise überlappen können. Da beide Walzenkörper 1 und 12 durch das Abrollen auf der Bodenoberfläche in Fahrt- oder Arbeitsrichtung F die gleiche Drehrichtung aufweisen, laufen die Mitnehmer 3 an der Stelle, an welcher sich die Teilkreisumfänge 11 der jeweiligen Teilringe 9 beziehungsweise der Walzenkörper 1 und 12 überlappen, gegeneinander und reinigen sich durch die Abrollbewegung der Walzenkörper 1, 12 selbst. Anstelle der dargestellten Walzenkörper 1 und 12 können alternativ oder im Kombination einzelne Walzenkörper gemäß der Darstellung aus Figur 3 in den Walzenrahmen 19 eingesetzt werden. Der seitliche Versatz der Mitnehmer 3 bzw. deren Ringe 8 oder Ringsegmente aus Figur 3 gilt analog zu den zuvor beschriebenen Verhältnissen und beträgt ebenfalls bevorzugt die Hälfte des seitlichen Teilungsabstandes t. Bei Verwendung eines Walzenkörpers 1 aus Figur 3 überlappen lediglich die vom Walzenmantel 2 abstehenden Mitnehmer im Bereich zwischen dem ersten und zweiten Walzenkörper 1 und 12. Der Achsabstand a ist entsprechend zu wählen.

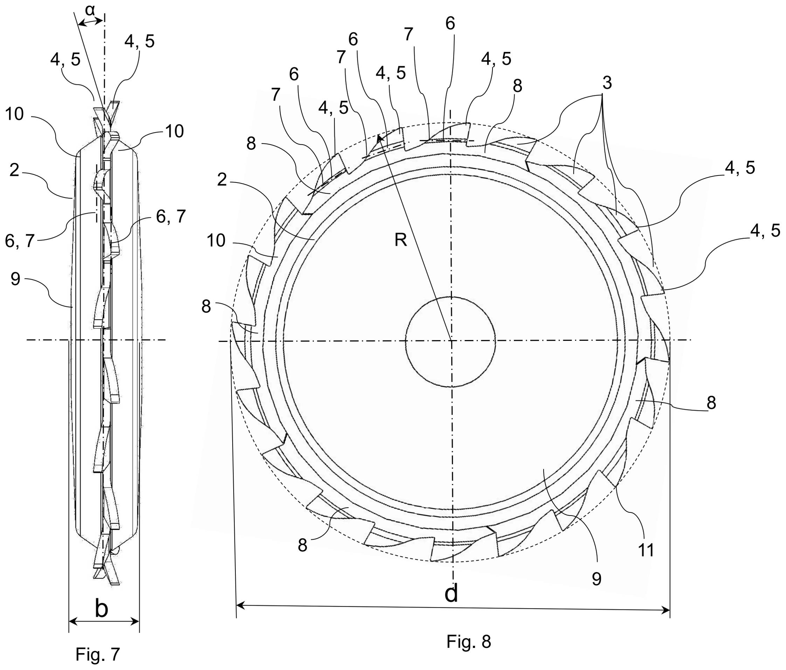

Analog zu Figur 4 und 5 zeigen Figur 7 und 8 zeigen einen einzelnen Teilring 9 des Walzenkörpers 1 in Vorder- und in korrespondierender Seitenansicht. Der Teilring 9 weist eine gesamte Breite b sowie einen Teilkreisumfang mit dem Durchmesser d auf. Der Walzenmantel 2 des Teilringes 9 ist aus zwei gegeneinander gerichteten Halbschalen gepresst, in deren Mitte sich die Mitnehmer 3 erhaben vom Walzenmantel 2 abstehend zum Durchmesser d des Teilkreisumfanges 11 erstrecken. Die Mitnehmer 3 sind in regelmäßigen Abständen auf dem Teilkreisumfang 11 verteilt angeordnet und bevorzugt aus einem Ring oder Ringsegment 8 als Zuschnitt gefertigt. Im vorliegenden Beispiel sind jeweils vier Mitnehmer 3 in einem Ringsegment zusammengefasst. Die Mitnehmerenden 4 der Mitnehmer 3 sind jeweils abwechselnd nach rechts und links um die Biegeachsen 7 aus der Mitte des Teilringes 9 mit einem Schränkungsknick 6 nach außen gebogen beziehungsweise gekantet oder verschränkt. Die Biegewinkel α der Mitnehmerenden 4 sind, im Schränkungsknick 6 zu einer Ebene durch den Teilkreisumfpang 11 der Mitnehmer 3 oder der Mittelebene des Teilringes 9 gemessen, jeweils in einem spitzen Winkel α gebogen. Bevorzugt betragen die Biegewinkel α zumindest 5 Grad, jedoch nicht mehr als 60 Grad und liegen weiter bevorzugt in einem Bereich zwischen 10 und 45 Grad, weiter bevorzugt 20 und 30 Grad. Die jeweiligen Biegeachsen 7 der Mitnehmerenden 4 sind dabei jeweils eine tangential oder konzentrisch zum Umfang des Walzenmantels 10 oder des Walzenkörpers 1 oder des Teilringes 9 ausgerichtet. Durch diese Anordnung stehen die Biegeachsen 7 der Mitnehmerenden 4 jeweils senkrecht zum Radius R des Außenumfangs d oder Teilkreisumfanges 11 des Walzenkörpers 1 oder im Falle einer durchgehenden Walze, wie in Figur 3 dargestellt, senkrecht zum Radius R der Mantelfläche 11 des Walzenmantels 2. Die Mantelflächen 10 des Walzenmantels 2 des Teilringes 9 sind vorliegend jeweils abfallend zur Mitte des Teilringes 9 abgeschrägt, so dass diese im Kontakt mit der Bodenoberfläche einen V-förmigen Keil als Rille oder Furche in der Bodenoberfläche hinterlassen. Die dadurch entstehende , V-förmige Rille im Boden wird durch die Hakenenden 5 der abgebogenen Mitnehmerenden 4 an ihren V-Flanken jeweils partiell unterbrochen, während eine gewünschte, partielle Bodenverdichtung im Bereich des Hakenendes zu der der V-Flanke gegenüberliegenden Seite erfolgt. Hierdurch wird die kappilare Wasseraufnahme des Bodens verbessert. Die Hakenenden 5 der abgebogenen Mitnehmerenden 4 stehen jeweils frei über die jeweilige Mantelfläche 10. Durch die abgeschrägte Mantelfläche 10 und /oder der gewählten Form des Hakenendes 5 vergrößert sich die lichte Weite zwischen Hakenende 5 und Mantelfläche 10, wie in Figur 7 zu sehen, zunehmend. Hierdurch wird ein Einklemmen von Bodenmaterial, Pflanzenresten oder Fremdkörpern zwischen den Mitnehmerenden 4 und dem Walzenmantel 2 vermieden. Die Biegung oder Verschränkung der Mitnehmerenden 4 beziehungsweise deren Hakenende 5 ragt seitlich nicht über die Breite b des Teilringes 9 hinaus. Somit beträgt die jeweilige seitliche Ausladung der Biegung oder Verschränkung der Mitnehmerenden 4 nicht mehr als die Hälfte der Breite b, weiter bevorzugt nicht mehr als ein Drittel der Breite b, noch weiter bevorzugt nicht mehr als ein Viertel der Breite b des Teilringes 9. Alternativ zu einem Schränkungsknick 6 können die Mitnehmer 3 entsprechend der vorgeschlagenen Winkel α insbesondere auch einzeln auf dem Walzenmantel Umfang 10 oder dem Walzenkörpers 1 oder am Außenumfang des Teilringes 9 befestigt und insbesondere verschweißt werden.

### Bezugszeichenliste

1 Walzenkörper
2 Walzenmantel
3 Mitnehmer
4 Mitnehmerende
5 Hakenende
6 Schränkungsknick
7 Biegeachse
8 Ring / Ringsegment
9 Teilring
10 Mantelflächen
11 Teilkreisumfang
12 Walzenkörper
13 Bodenbearbeitungswerkzeuge
14 Einebnungswerkzeuge
15 landwirtschaftliches Gerät
16 Walzenanordnung
17 Geräterahmen
18 Anbauturm
19 Walzenrahmen
20 Bodenoberfläche
21 Abstreifer
R Radius

## Patentansprüche

1. Walzenkörper (1) mit einem umlaufenden Walzenmantel (2), wobei Mitnehmer (3) erhabend und abstehend auf dem Teilkreisumfang (11) des Walzenmantels (2) angeordnet sind,
**dadurch gekennzeichnet, dass**
Mitnehmer (3) ein Mitnehmerende (4) aufweisen,
und die Mitnehmerenden (4) seitlich verschränkt zum Teilkreisumfang des Walzenmantels (2) angeordnet sind.

2. Walzenkörper (1) nach Anspruch 1,
**dadurch gekennzeichnet,**
**dass** die Mitnehmerenden (4) seitlich abwechselnd nach rechts und links verschränkt angeordnet sind.

3. Walzenkörper (1) nach Anspruch 1 oder 2,
**dadurch gekennzeichnet,**
**dass** der Walzenkörper (1) durch Bodenkontakt eine Drehbewegung in einem Drehsinn ausführt und die Mitnehmerenden (4) entgegen dem Drehsinn ausgerichtet angeordnet sind.

4. Walzenkörper (1) nach einem der vorstehenden Ansprüche,
**dadurch gekennzeichnet,**
**dass** die Mitnehmer (3) hakenförmig ausgebildet sind und die Mitnehmerenden (4) als freies, vom Walzenmantel (2) abstehendes Hakenende (4) ausgebildet sind.

5. Walzenkörper (1) nach einem der vorstehenden Ansprüche,
**dadurch gekennzeichnet,**
**dass** die Mitnehmer (3) zumindest einen Schränkungsknick (6) aufweisen, wobei der Schränkungsknick (6) eine radial vom Walzenmantel (10) oder Walzenkörper (1) abstehende Knickachse, Kantachse oder Biegeachse (7) aufweist.

6. Walzenkörper (1) nach einem der vorstehenden Ansprüche,
**dadurch gekennzeichnet,**
**dass** die Mitnehmer (3) zumindest einen Schränkungsknick (6) aufweisen, wobei der Schränkungsknick (6) eine tangential oder konzentrisch zum Walzenmantel (10) oder Walzenkörper (1) verlaufende Knickachse, Kantachse oder Biegeachse (7) aufweist.

7. Walzenkörper (1) nach einem der vorstehenden Ansprüche,
**dadurch gekennzeichnet,**
**dass** das freie Hakenende parallel zum Teilkreisumfang beziehungsweise dessen Teilkreisebene endend ausgebildet ist.

8. Walzenkörper (1) nach einem der vorstehenden Ansprüche,
**dadurch gekennzeichnet,**
**dass** das freie Hakenende abgewinkelt zum Teilkreisumfang beziehungsweise dessen Teilkreisebene endend ausgebildet ist.

9. Walzenkörper (1) nach einem der vorstehenden Ansprüche,
**dadurch gekennzeichnet,**
**dass** mehrere Mitnehmer (3) in einem Ring oder Ringsegment zusammengefasst ausgebildet oder angeordnet sind.

10. Walzenkörper (1) nach einem der vorstehenden Ansprüche,
**dadurch gekennzeichnet,**
**dass** der Walzenmantel (2) aus mehreren Teilringen (9) gebildet ist, wobei die Teilringe (9) entlang der axialen Erstreckung des Walzenkörper (1) beabstandet angeordnet sind.

11. Walzenkörper (1) nach einem der vorstehenden Ansprüche,
**dadurch gekennzeichnet,**
**dass** die Teilringe (9) schräge Mantelflächen aufweisen und die freien Hakenenden entlang deren Erstreckung zumindest abschnittsweise einen sich vergrößernden Abstand zur Mantelfläche (19) aufweisen.

12. Walzenkörper (1) nach einem der vorstehenden Ansprüche,
**dadurch gekennzeichnet,**
**dass** mehrere Mitnehmer (3) auf einem jeweiligen Teilkreisumfang (11) des Walzenmantels (2) angeordnet sind und die jeweiligen Teilkreisumfänge (11) in einer seitlichen Teilung entlang der axialen Erstreckung des Walzenkörpers (1) beabstandet angeordnet sind, wobei die Mitnehmer (3) auf dem jeweiligen Teilkreisumfang (11) in einer Umfangsteilung beabstandet angeordnet sind, wobei die Mitnehmer (3) der jeweiligen Teilkreisumfänge (11) in einem Versatz der Umfangsteilung oder bevorzugt spiralförmig entlang der axialen Erstreckung des Walzenkörpers (1) angeordnet sind.

13. Walzenkörper (1) nach einem der vorstehenden Ansprüche,
**dadurch gekennzeichnet,**
**dass** mehrere Mitnehmer (3) auf einem jeweiligen Teilkreisumfang (11) des Walzenmantels (2) angeordnet sind und die jeweiligen Teilkreisumfänge (11) in einer seitlichen Teilung entlang der axialen Erstreckung des Walzenkörpers (1) beabstandet angeordnet sind, wobei der seitliche Abstand beziehungsweise die Ausladung der Verschränkung der Mitnehmerenden (4) maximal einem Halb der seitlichen Teilung (t) der jeweiligen Teilkreisumfänge (11) entspricht.

14. Walzenkörper (1) nach einem der vorstehenden Ansprüche,
**dadurch gekennzeichnet,**
**dass** der seitliche Abstand beziehungsweise die Ausladung der Verschränkung der Mitnehmerenden (4) maximal der Teilringbreite (b) eines Teilringes (9) entspricht.

15. Anordnung von Walzenkörpern (1) nach einem der vorstehenden Ansprüche, **dadurch gekennzeichnet,**
**dass** ein erster und ein zweiter Walzenkörper (1, 12) hintereinander versetzt angeordnet sind, wobei die Mitnehmer (3) seitlich entlang der axialen Erstreckung des ersten Walzenkörpers (1) versetzt angeordnet sind, wobei die Walzenkörper (1,12) jeweils einen jeweiligen Außenumfang oder Teilkreisumfang (11) aufweisen und die Mitnehmer (3) überlappend in den Außenumfang oder Teilkreisumfang (11) des zweiten Walzenkörpers (12) ineinandergreifend angeordnet sind.
